(19) Europäisches Patentamt
European Patent Office
Office européen des brevets

(11) **EP 3 317 734 B1**

(12) **EUROPÄISCHE PATENTSCHRIFT**

(45) Veröffentlichungstag und Bekanntmachung des Hinweises auf die Patenterteilung:
**03.04.2019 Patentblatt 2019/14**

(21) Anmeldenummer: **16733339.2**

(22) Anmeldetag: **17.06.2016**

(51) Int Cl.:
***G05B 19/4093*** *(2006.01)*

(86) Internationale Anmeldenummer:
**PCT/EP2016/064021**

(87) Internationale Veröffentlichungsnummer:
**WO 2017/032474 (02.03.2017 Gazette 2017/09)**

(54) **STEUERUNGSVERFAHREN FÜR DIE BEWEGUNG EINES WERKZEUGS UND STEUERUNGSVORRICHTUNG**

CONTROL METHOD FOR THE MOVEMENT OF A TOOL AND CONTROL DEVICE

PROCÉDÉ DE COMMANDE DE MOUVEMENT D'UN OUTIL ET DISPOSITIF DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.08.2015 EP 15182171**

(43) Veröffentlichungstag der Anmeldung:
**09.05.2018 Patentblatt 2018/19**

(73) Patentinhaber: **Siemens Aktiengesellschaft
80333 München (DE)**

(72) Erfinder:
• **HAMM, Carsten
91330 Eggolsheim (DE)**
• **LORENZ, Florian Nikolaus
91058 Erlangen (DE)**

(56) Entgegenhaltungen:
**DE-B3-102013 112 232    DE-T2- 60 123 379
JP-A- 2007 200 037**

• **QING ZHEN BI ET AL: "An analytical curvature-continuous Bézier transition algorithm for high-speed machining of a linear tool path", INTERNATIONAL JOURNAL OF MACHINE TOOLS AND MANUFACTURE, ELSEVIER, US, Bd. 57, 16. Januar 2012 (2012-01-16), Seiten 55-65, XP028519071, ISSN: 0890-6955, DOI: 10.1016/J.IJMACHTOOLS.2012.01.008 [gefunden am 2012-02-08]**

**Beschreibung**

Die Erfindung betrifft ein Steuerungsverfahren für die Bewegung eines Werkzeugs mit einer Werkzeugmaschine zur Erzeugung einer beliebigen Sollfläche durch Bearbeiten, wobei ein numerisches Bahnprogramm, welches die Bearbeitung des Werkstücks mit dem Werkzeug in den Bearbeitungspunkten beschreibt, zur Steuerung der Werkzeugmaschine durch eine Steuerungsvorrichtung erzeugt wird, und wobei die Bahn aus mehreren Stützpunkten und Einzelbahnen besteht und jede Einzelbahn ein Paar der Stützpunkte miteinander verbindet, und wobei die Steuerung der Werkzeugmaschine entsprechend der erzeugten Bahn erfolgt. Weiterhin betrifft die Erfindung eine Steuerungsvorrichtung.

Werkstücke, die auf einer CNC-Maschine hergestellt werden sollen, werden zumeist im Computer-Aided Design (CAD) konstruiert. Beliebige Bauteile setzen sich oft aus einer größeren Zahl an Geometrie-Elementen zusammen. Die Übergänge werden nach Bedarf gestaltet und sind entweder geometrisch glatt oder explizit nicht glatt (Kanten, Ecken, Phasen etc.). Gerade bei der ersten Kategorie, nämlich dem geometrisch glatten Übergang, gibt es große Qualitätsunterschiede, die teilweise auf prinzipielle Schwächen der Software selber, teilweise auf falsche Bedienung, beispielsweise die Konstruktion des Werkstücks, zurückzuführen sind.

Für die maschinelle Fertigung wird die geometrische Beschreibung in den Schritten Computer-Aided Manufacturing (CAM) und Postprozessor (PP) in ein CNC-Bahnprogramm überführt. Das CNC-Bahnprogramm enthält in einer Bahnprogrammierung des Werkstücks neben notwendigen Steuerinformationen als wesentliche Information die Positionsbefehle für den Herstellungsprozess an der Werkzeugmaschine.

Im CAM wird die grundsätzliche Strategie zur Bearbeitung festgelegt, also in welcher Form und Abfolge das Werkzeug (z. B. Fräser) über das Material geführt wird. Dies kann z.B. mäander- oder spiral-förmig, etc. sein. Weiterentwicklungen erhöhen die Maschinenproduktivität durch Betrachtung der momentanen Span-Bildung. Eine höhere Ausbeute "Späne pro Vorschub", d. h. abgetragenes Volumen pro Werkzeugbahnlänge, erlangt man durch speziell generierte Werkzeugbahnen.

Aus der DE 601 23 379 T2 ist eine numerisch gesteuerte Bearbeitungseinheit für gekrümmte Flächen bekannt, die mit drei linearen Achsen und mindestens einer Drehachse ausgerüstet ist und eine Mehrachs-Simultansteuerungs-NC-Maschine beinhaltet, die von einer numerischen Steuereinheit mit Numeriksteuerungs-NURBS (non-uniform rational B-spline) -Interpolationsfunktion numerisch gesteuert wird.

Die JP 2007 200037 A betrifft eine numerische Steuervorrichtung, die ein Objekt zur Bewegung entlang eines Bewegungswegs gemäß einem Maschinenprogramm steuert. Falls aufeinander folgende Befehlsblöcke in die gleiche Richtung orientiert sind, werden sie als ein einzelner Vektor gesetzt.

Die DE 10 2013 112 232 B3 betrifft ein Verfahren zur Bearbeitung eines Rohteils mittels eines Werkzeuges zur Herstellung eines Fertigteils. Bei der Bearbeitung des Rohteils mittels eines Werkzeuges zur Herstellung eines Fertigteils wird das Werkzeug auf vordefinierten Führungsbahnen bzw. Bahnen geführt, die softwaregestützt berechnet werden können. Eine einzelne Führungsbahn bzw. Bahn besteht aus beliebig vielen aufeinanderfolgenden Bahnsegmenten bzw. Bahnabschnitten.

Der Erfindung liegt die Aufgabe zugrunde ein hinsichtlich Oberflächengüte und Bearbeitungsergebnis verbessertes Verfahren für eine Werkzugmaschine, insbesondere eine Fräsmaschine, anzugeben. Eine weitere Aufgabe liegt in der Angabe einer solchen Vorrichtung.

Die auf das Verfahren bezogene Aufgabe wird gelöst durch die Angabe eines Steuerungsverfahrens mit den im Anspruch 1 angegebenen Merkmalen.

Die auf die Vorrichtung bezogene Aufgabe wird gelöst durch die Angabe einer Steuerungsvorrichtung mit den im Anspruch 10 angegeben Merkmalen.

Dabei bezieht sich ein Bahnprogramm auf verschiedenste Anwendungsbereiche. Eine Möglichkeit ist es, durch das Bahnprogramm mittels eines Werkzeuges eine Freiformfläche eines Körpers entstehen zu lassen. Der Körper kann dabei selbst auch bewegt sein, so dass der Bahnverlauf des Werkzeuges sich unterschiedlich zur Freiformfläche des Werkstücks bzw. zu den Konturen des Werkstücks ist. Ein Beispiel bei dem sich das Werkstück auch mit bewegt, findet sich bei Drehmaschinen. Bearbeitungsmaschinen, welche zumindest auch fräsen oder schleifen, sind auch mit Rotationsachsen ausführbar, wobei auch hier die erfindungsgemäßen Vorteile nutzbar sind. Auch kann die Erfindung bei der Laserbearbeitung/Laserschneiden und auftragenden Verfahren etc. einsetzbar sein.

Die CNC-Steuerung muss die generierte Bahn der Werkzeugmaschine abfahren. Oftmals weisen jedoch die Bahnen Merkmale auf, die aufgrund praktischer Einschränkungen nicht einwandfrei umgesetzt werden können.

Die Qualität des beim Abtrag tatsächlich hinterlassenen Schnittbildes hängt in großem Maß von der Qualität der Bahngeometrie und anderen Eigenschaften ab. Die Art, wie die Übergänge von einer Einzelbahn zur nächsten ausgeführt sind, bestimmt, ob die Maschine dem Übergang gut oder schlecht folgen kann. Die mathematisch relevanten Merkmale sind vor allem die Stetigkeit bzw. die Differenzierbarkeit der Einzelbahnabschnitte. Mit der Ordnung der Stetigkeit steigt die "Gutmütigkeit" der Bahn für das Abfahren durch eine CNC-gesteuerte Werkzeugmaschine.

Eine CNC-gesteuerte Werkzeugmaschine kann grundsätzlich alle Übergänge (irgendwie) anfahren. Je nach gewünschter Strategie kommt es dabei aber zu einem Verletzen der Geometrie, wie z. B. Verrunden oder Überschleifen, zu einer Variation der Dynamik wie z.B. Abbremsen oder Beschleunigen oder zu einer Kombination aus beidem. Erstes bedeutet Abstriche in der Oberflächengenauigkeit, zweites bedeutet Unruhe in der Maschinenbewegung und damit das Abbilden der Maschinendynamik auf dem Werkstück. Hier sind beispielsweise Schwingungen zu nennen. Erfindungsgemäß wird nun die generierte Bahn an der geometrischen Qualität, insbesondere der Oberfläche orientiert. Hierzu wird ein Qualitätskriterium benötigt, welches die Eigenschaften der Oberflächen bzw. der Bahnen zuverlässig, numerisch stabil und performant ermitteln kann. Zur Ermittlung eines Bewertungsmaßes wird zumindest das Kriterium der Stetigkeit herangezogen.

D.h. das Bahnprogramm zur Steuerung der Werkzeugmaschine wird erzeugt und anhand zumindest der Stetigkeit der durch das Bahnprogramm erzeugten Bahn bewertet und ausgewählt. Ein und dasselbe geometrische Feature kann dabei in einer Richtung durchlaufen stetig sein, und in einer anderen Richtung nicht. Es ergeben sich Vorzugsrichtungen für entsprechende Einzelbahnen. Die Einzelbahnen der Bearbeitung werden nun so gewählt, dass die ermittelten Vorzugsrichtungen möglichst genutzt werden, um das Werkstück zu fertigen.

Erfindungsgemäß wird daher eine differenzialgeometrische Eigenschaft der Werkstückoberfläche in die Bearbeitungsstrategie, insbesondere hier eine Frässtrategie einbezogen. Dies ermöglicht eine Frässtrategie die möglichst optimal von der Maschine abgefahren werden kann. Es entstehen Bahnen, die für die Verarbeitung in der CNC-Maschine besonders günstig sind, und die für die Maschinendynamik die wenigste Anregung bedeuten. Das Bearbeitungsergebnis ist mit Blick auf Oberflächengüte und -genauigkeit bestmöglich.

In den Unteransprüchen sind weitere vorteilhafte Maßnahmen aufgelistet, die beliebig miteinander kombiniert werden können, um weitere Vorteile zu erzielen.

Vorteilhafterweise werden mehrere Bahnprogramme zu einer vorgegebenen Sollfläche erzeugt und hinsichtlich des geometrischen Qualitätskriteriums bewertet und ausgewählt. Auch kann das geometrische Qualitätskriterium als zusätzliches Kriterium zudem die Tangentenstetigkeit (G1-Stetigkeit) umfassen. Zusätzlich kann das geometrische Qualitätskriterium als zusätzliches Kriterium zudem die Krümmungsstetigkeit (G2-Stetigkeit) umfassen.

Bevorzugt umfasst das geometrische Qualitätskriterium sowohl das Kriterium der Krümmungsstetigkeit als auch das Kriterium der Tangentenstetigkeit, wobei ein Kombinationstool das Bahnprogramm zur Steuerung der Werkzeugmaschine anhand einer geeigneten Kombination aus diesen Kriterien berechnet, bewertet und auswählt. Dies ist vor allem der Fall, wenn die Bahn abschnittsweise krümmungsstetig und tangentenstetig ist.

Das heißt, es erfolgt die Bahnprogrammierung des Werkstücks auf beliebigem Wege. Zwei (oder mehr) Varianten werden sodann hinsichtlich ihrer geometrischen Beschaffenheit analysiert und bewertet. Die jeweils besser geeignete erhält den Vorzug und wird zur Herstellung genutzt. Zur Ermittlung eines Bewertungsmaßes können dabei die verschiedenen Kriterien, d.h. Stetigkeit, G1-Stetigkeit und G2-Stetigkeit ausgerechnet und in geeigneter Weise, z.B. Mittelwert, Maximum, etc. kombiniert werden.

In einer bevorzugten Ausgestaltung umfasst das geometrische Qualitätskriterium zusätzlich als Kriterium noch die Charakteristika der Werkzeugmaschine. D.h. in die Bewertung gehen noch Charakteristika der konkreten Werkzeugmaschine ein, z.B. das unterschiedliche Dynamikvermögen einzelner Maschinenachse, ein. Die Bewertung eines Bahnprogramms kann für unterschiedliche Maschinen unterschiedliche Ergebnisse liefern. So lässt sich die günstigste Kombination aus Werkstück und Maschine finden. Weitere Charakteristika sind beispielsweise die minimale, mittlere und maximale Vorschubgeschwindigkeit, die während der Abarbeitung des Bahnprogramms auftritt, die minimalen, mittleren und maximalen Geschwindigkeiten der Maschinenachsen, die während der Abarbeitung des Bahnprogramms auftreten, die minimalen, mittleren und maximalen Achsenbeschleunigungen der Maschinenachsen, die während der Abarbeitung des Bahnprogramms auftreten, die minimale, mittlere und maximale Stromaufnahme (damit auch die Kraft- oder Momentaufnahme), die während der Abarbeitung des Bahnprogramms auftreten, die maximale Änderungsgeschwindigkeit (zeitliche Ableitung) der Stromaufnahme des Motors der jeweiligen Maschinenachse, die mittlere Spindeldrehzahl (Sollvorgabe und Istwert), die während der Abarbeitung des Bahnprogramms auftritt, das minimale, mittlere und maximale Moment der Spindel, die maximale Änderungsgeschwindigkeit (zeitliche Ableitung) des Spindelmoments als auch beispielsweise die Bearbeitungsdauer.

Selbstverständlich kann das geometrische Qualitätskriterium sowohl das Kriterium der Krümmungsstetigkeit und das Kriterium der Tangentenstetigkeit als auch das Kriterium der Charakteristika umfassen, wobei ein Kombinationstool das Bahnprogramm zur Steuerung der Werkzeugmaschine anhand einer geeigneten Kombination aus diesen Kriterien berechnet, bewertet und dann auswählt. Dadurch kann z.B. eine noch bessere Abarbeitung des Bahnprogramms erzielt werden, und/oder eine bessere Güte der zu erwartenden Oberfläche, und/oder eine geringe Arbeitszeit etc.. Dies ist vor allem für Bahnen relevant die abschnittweise krümmungsstetig oder tangentenstetig sind. Bevorzugt umfasst die Bahn verschiedene Einzelbahnen. Jede Einzelbahn wird nach dem geometrischen Qualitätskriterium bewertet.

Dabei können die Bewertungen der verschiedenen Einzelbahnen z.B. auch gewichtet werden, um ein geeignetes Bahnprogramm zu erstellen.

In einer bevorzugten Ausgestaltung ist das geometrische Qualitätskriterium die Krümmungsstetigkeit (G2-Stetigkeit) wobei die nach dem geometrischen Qualitätskriterium ausgewählte Einzelbahn eine Vorzugsrichtung ausweist. Die Bahn wird nun in bevorzugter Ausgestaltung nach den Vorzugsrichtungen der Einzelbahnen ausgewählt.

Erfindungsgemäß wird einem ersten Schritt die Werkstückgeometrie hinsichtlich ihrer differenzialgeometrischen Beschaffenheit analysiert und bewertet. Ein und dasselbe geometrische Feature kann dabei in einer Richtung durchlaufen G2-stetig sein, und in einer anderen Richtung nicht. Es ergeben sich Vorzugsrichtungen für entsprechende Einzelbahnen. In einem zweiten Schritt werden die Einzelbahnen der Bearbeitung nun so gewählt, dass die ermittelten Vorzugsrichtungen möglichst genutzt werden, um das Werkstück zu fertigen.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:

FIG 1: Beispiele für Fräsbahnen nach dem Stand der Technik generiert,

FIG 2: ein Beispiel für eine technologie-optimierte Fräsbahn,

FIG 3: ein Beispiel für zwei Bahnen über einen konstruierten Flächenübergang,

FIG 4: eine Auswertung der G2-Stetigkeit in einem Punkt,

FIG 5: die Krümmungsänderungen an dem Werkstück selber,

FIG 6: ein dreidimensionales Istwerkstück,

FIG 7: die mäanderförmige Fräsbahn 12 für das Istwerkstück nach dem Stand der Technik,

FIG 8: Erfindungsgemäße Fräsbahn mit Vorzugseinzelbahnen 13 gemäß der Erfindung.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

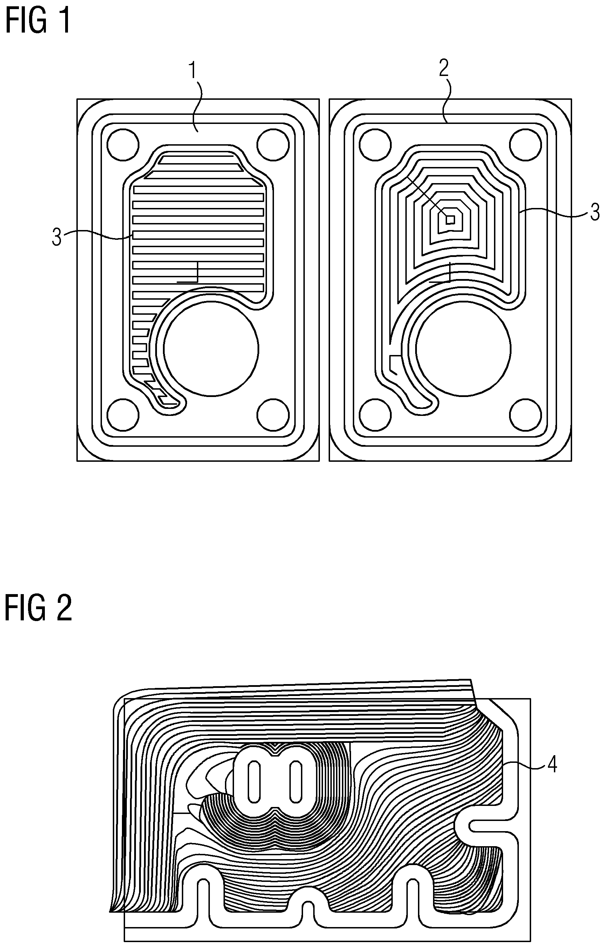

Im CAM wird die grundsätzliche Strategie zur Bearbeitung festgelegt, also in welcher Form und Abfolge das Werkzeug (z. B. Fräser) über das Material geführt wird. Typische Beispiele sind in FIG 1, links die Mäander 1 ("zig", "zig-zag") oder FIG 1, rechts die Spiralen 2. Die CNC-Steuerung an der Werkzeugmaschine muss dann die generierte Bahn 3 abfahren. Oftmals weisen die Bahnen 3 Merkmale auf, die aufgrund praktischer Einschränkungen nicht einwandfrei umgesetzt werden können.

Weiterentwicklungen erhöhen die Maschinenproduktivität durch Betrachtung der momentanen Span-Bildung. Eine höhere Ausbeute "Späne pro Vorschub" (d. h. abgetragenes Volumen pro Werkzeugbahnlänge) erlangt man durch speziell generierte Werkzeugbahnen. FIG 2 zeigt ein Beispiel für eine technologie-optimierte Fräsbahn 4, welche mittels einer Standardsoftware erzeugt wurde.

Die vorliegende Erfindung beschreibt ein neuartiges Konzept zur Wahl von Fräsbahnen. Dieses ist geometrisch motiviert und erlaubt das optimale Abfahren durch die NC-gesteuerte Werkzeugmaschine.

Es wurde erkannt, dass die Qualität des beim Abtrag tatsächlich hinterlassenen Schnittbildes in großem Maß von der Qualität der Bahngeometrie abhängt. Die Art, wie die Übergänge von einer Einzelbahn zur nächsten Einzelbahn ausgeführt sind, bestimmt, ob die Maschine dem Übergang gut oder schlecht folgen kann. Die mathematisch relevanten Merkmale sind die Stetigkeit bzw. die Differenzierbarkeit der Einzelbahnen bzw. der Bahnabschnitte. Dabei baut die Stetigkeits-Ordnung logisch aufeinander auf. Eine Stufe setzt die jeweils niedrigere voraus, d.h. die G1-Stetigkeit erfordert zwingend die G0-Stetigkeit. Mit der Ordnung der Stetigkeit steigt die "Gutmütigkeit" der Bahn für das Abfahren durch eine CNC-gesteuerte Werkzeugmaschine:

- G0-stetig: die Einzelbahnen schließen geometrisch aneinander an, d. h. es gibt zwischen dem Ende der vorigen Einzelbahn und dem Anfang der nächsten Einzelbahn keinen Versatz. Der Übergang darf aber sehr wohl einen Knick (Änderung der Richtung) aufweisen.

- G1-stetig: die Einzelbahnen schließen "tangentenrichtig" aneinander an, d. h. die Richtung des vorigen Abschnitts und die Richtung des folgenden Abschnitts stimmen überein. Ein solcher Übergang kann ohne Änderung der Geschwindigkeit abgefahren werden.

- G2-stetig: die Einzelbahnen schließen "krümmungsrichtig" aneinander an, d. h. die Krümmung des vorigen Abschnitts und die Krümmung des folgenden Abschnitts stimmen überein. Eine solche Bahn kann ohne Änderung der Beschleunigung abgefahren werden.

Erfindungsgemäß wird nun die Bahn, anhand der geometrischen Qualität der Oberfläche bewertet und ausgewählt. Dazu werden die Eigenschaften der Oberfläche in Bezug auf die Bahnen zuverlässig, numerisch stabil und performant ermitteln.

Hierfür wird ein Bahnprogramm, welches die Bahn in Bezug auf die geometrische Beschaffenheit der Oberfläche des zu bearbeitenden Werkstücks beschreibt, erzeugt und anschließend anhand des geometrischen Qualitätskriteriums bewertet und ausgewählt, wobei das geometrische Qualitätskriterium zumindest als ein Kriterium die Stetigkeit umfasst.

Erfindungsgemäß erfolgt die Bahnprogrammierung des Werkstücks auf beliebigem Wege. Zwei oder mehr Varianten werden sodann hinsichtlich ihrer geometrischen Beschaffenheit analysiert und bewertet. Die jeweils besser geeignete erhält den Vorzug und wird zur Herstellung genutzt. Zur Ermittlung eines Bewertungsmaßes können die Kriterien der Stetigkeit, Tangentenstetigkeit, Krümmungsstetigkeit kombiniert, ausgerechnet und in geeigneter Weise, z. B. Mittelwert, Maximum, kombiniert werden.

Auch können in das geometrische Qualitätskriterium noch Charakteristika der konkreten Werkzeugmaschine eingehen, z. B. das unterschiedliche Dynamikvermögen einzelner Maschinenachsen. Die Bewertung eines Bahnprogrammes kann daher für unterschiedliche Maschinen unterschiedliche Ergebnisse liefern. So lässt sich die günstigste Kombination aus Werkstück und Maschine finden.

Auch kann z.B. als geometrisches Qualitätskriterium nur die G2-Stetigkeit in Betracht gezogen werden. Hier wird in einem ersten Schritt wird die Werkstückgeometrie hinsichtlich ihrer differenzialgeometrischen Beschaffenheit analysiert und bewertet. Ein und dasselbe geometrische Feature kann in einer Richtung durchlaufen G2-stetig sein und in einer anderen Richtung nicht. Es ergeben sich daher Vorzugsrichtungen für entsprechende Einzelbahnen. In einem zweiten Schritt werden die Einzelbahnen der Bearbeitung nun so gewählt, dass die ermittelten Vorzugsrichtungen möglichst genutzt werden, um das Werkstück zu fertigen.

Ein Bahnprogramm setzt sich stets aus einer Abfolge an Einzelbahnen zusammen. Diese ergeben in Summe die gesamte Fertigungsaufgabe, sprich die zu fertigende Geometrie. Der Stand der Technik kennt diverse Strategien, wie die im CAD konstruierte Geometrie mit Einzelbahnen herzustellen ist. Es ist bislang nicht bekannt, differenzialgeometrische Eigenschaften der Werkstückoberfläche in die Frässtrategie einzubeziehen. Dies ermöglicht eine Frässtrategie, die möglichst optimal von der Maschine abgefahren werden kann. Es entstehen Bahnen, die für die Verarbeitung in der NC besonders günstig sind, und die für die Maschinendynamik die wenigste Anregung bedeuten. Das Bearbeitungsergebnis ist mit Blick auf Oberflächengüte und -genauigkeit bestmöglich.

Nachfolgend sollen beispielhaft Algorithmen zur Bestimmung der differenzialgeometrischen Eigenschaften einer Fläche näher beschrieben werden, anhand derer ein solches Bahnprogramm erstellt werden kann.

Dazu ist ein Flächenübergang (nicht gezeigt) durch einen "letzten" Punkt p1 auf einer ersten Fläche F und einen "ersten" Punkt p2 auf einer zweiten Fläche G gekennzeichnet (nicht gezeigt). Um einen Flächenübergang differenzialgeometrisch zu klassifizieren, ist es notwendig die entsprechenden Punkte p1, p2 beider Flächen F, G zu betrachten. Diese erhält man z. B. durch den Schnitt beider Flächen F, G mit einer Hilfsebene, die sich aus der momentanen Fräsrichtung und der Flächennormalen ergibt.

G0-Stetigkeit: Um auf G0-Stetigkeit zu prüfen, wird die Norm der Differenz beider Punkte, d.h. Vektoren im $R\_3$ betrachtet. Es gilt:

$$|p_1 - p_2| < \varepsilon$$

Liegt der Abstand beider Punkte p1, p2 unterhalb einer Schwelle $\varepsilon$, so kann der Übergang als G0-stetig angesehen werden.

Die G1-Stetigkeits-Prüfung setzt G0-Stetigkeit voraus, daher kann im Folgenden ohne Beschränkung der Allgemeinheit von

$$p1 = p2 = p$$

ausgegangen werden. Damit ein Flächenübergang in einem Punkt p G1-stetig ist, müssen die entsprechenden Tangentialebenen der Flächen F und G identisch sein. Jede der beiden Flächen F, G besitzt im Punkt P jeweils zwei Ableitungsvektoren, nämlich jeweils die erste Ableitung in Parameterrichtung, die die Tangentialebene aufspannen, und die aufgrund von verschiedenen Parametrisierungen der Flächen F und G in Länge und Richtung stark variieren können. Die beiden Ableitungsvektoren bilden die sogenannte Jacobi-Matrix J. Es bleibt also zu prüfen, ob es eine Möglichkeit gibt, das Vektorenpaar der ersten Fläche JF auf das Vektorenpaar der zweiten Fläche JG zu transformieren. Eine solche Transformation X heißt auch lokale Reparametrisierung. Gibt es eine solche lokale Reparametrisierung X, dann sind die Tangentialebenen automatisch identisch. Dies ist der Fall, wenn:

$$\|J_F - J_G X\| < \varepsilon$$

Normiert man vor der linearen Ausgleichsrechnung die Spalten beider Jacobi-Matrizen, kann anhand der 2-Norm (größter Singulärwert) des Fehlers aus der Matrix X der Winkel $\alpha$ zwischen den beiden Flächennormalen wie folgt bestimmt werden:

$$(\alpha = \arcsin \|J_F - J_G X\|)$$

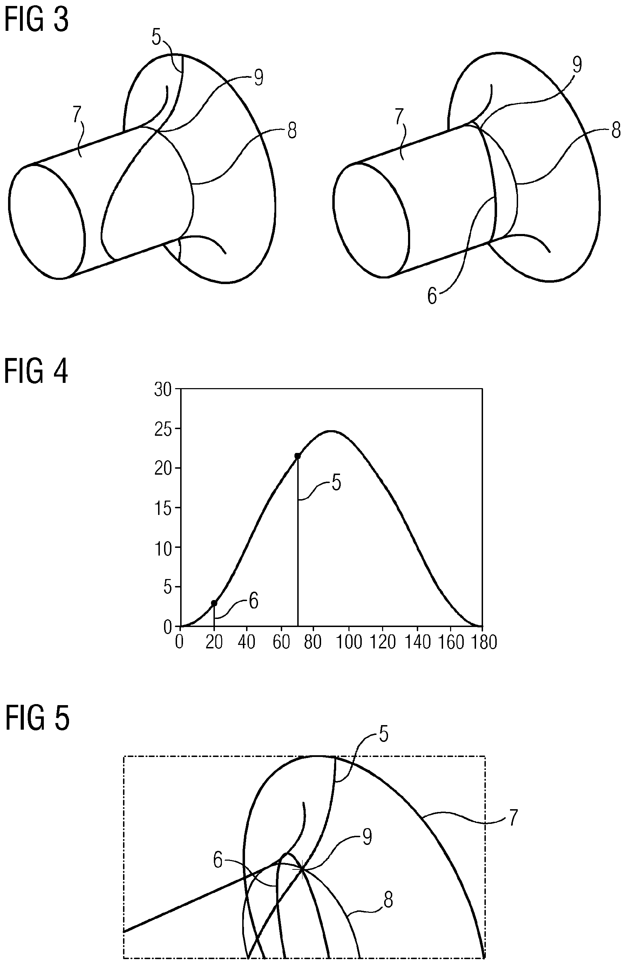

Die G2-Stetigkeits-Prüfung setzt G1-Stetigkeit voraus. Während dem Richtungsbegriff im Zusammenhang mit der G1-Stetigkeit keinerlei Bedeutung zukommt (entweder gibt es am Flächenübergang einen Knick, dann aber in jeder Richtung über dem Punkt oder es besteht Glattheit), spielt er bei der Betrachtung der G2-Stetigkeit eine zentrale Rolle. Vergleicht man zwei potentielle Bahnen, die einen gemeinsamen Punkt auf dem Flächenübergang besitzen, wird das Konzept der Richtungs-G2-Stetigkeit in FIG 3 verdeutlicht.

In FIG 3 werden zwei potentielle Bahnen auf einem Werkstück 7, nämlich eine erste Bahn als Kurve 5 und eine zweite Bahn als Kurve 6, die einen gemeinsamen Punkt 9 auf dem Flächenübergang 8 besitzen, verglichen. Während das Vorzeichen der Krümmung auf der Kurve 5 in FIG 3 am Flächenübergang 8 wechselt und damit die Krümmung einen starken Sprung aufweist, ist die Änderung der zweiten Ableitung der Kurve 6 sehr gering und kaum sichtbar. Die berechnete Reparametrisierung aus der G1-Stetigkeit taucht auch beim Vergleich der zweiten Ableitung wieder auf. Eine G2-Stetigkeit liegt vor, wenn

$$|y^T ( H_F - X^T H_G X + J_F \lambda)y| < \varepsilon \quad mit \; \lambda \, reeler \, Eintrag \, Parameter$$

und wobei $y \in \mathbb{R}^2$ eine Richtung auf der Tangentialebene und H die sog. Hessematrix (= zweite Ableitungen) sind.

Alle vorgestellten Verfahren basieren auf der Berechnung der Moore-Penrose-Inversen, für die zahlreiche numerisch stabile Verfahren bekannt sind. Als Resultat erhält man für jede Richtung einen Wert für den Krümmungssprung. Dies ist in FIG 4 gezeigt.

FIG 4 zeigt das Maß der Krümmungsänderung (x-Achse) beim Übergang von F nach G im Punkt 9. Beim Vergleich der Kurve 6 mit der Kurve 5 erkennt man, dass die Kurve (Bahn) 6 den deutlich kleineren Krümmungssprung enthält. Zudem ist in FIG 4 ein Maximum bei 90° zu erkennen, das zudem darauf hinweist, dass in dieser Richtung (90°) der Krümmungssprung am stärksten ausgeprägt wäre. Dies wird in der FIG 5 nochmal verdeutlicht. Somit würde eine Bearbeitung hinsichtlich der Kurve 5 gewählt werden.

Aus der FIG 4 und der FIG 5 ist auch zu erkennen dass jeder beliebige Winkel zwischen 0° und 180° möglich ist, je nach Bahnprogramm und abgefahrener Bahn bzw. Einzelbahn.

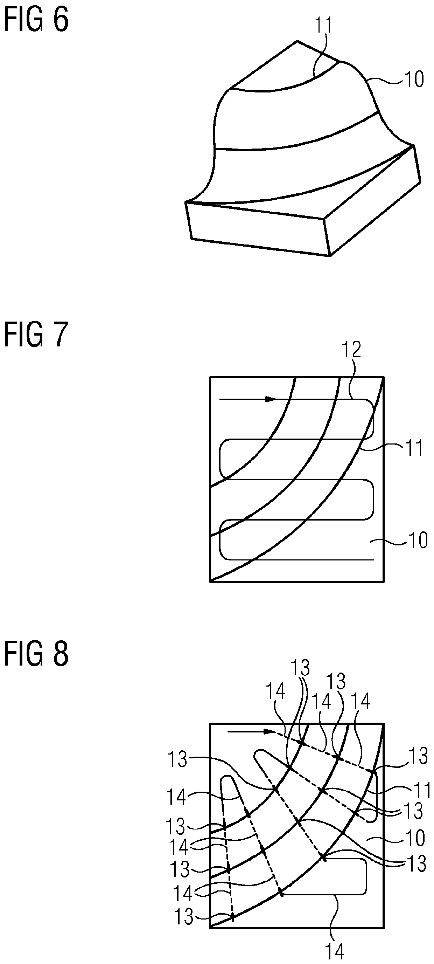

Die Figuren 6-8 zeigen die Erfindung an einem weiteren Beispiel. Hier wurde als geometrisches Qualitätskriterium die G2-Stetigkeit gewählt.

FIG 6 zeigt beispielhaft ein 3-dimensionales Ist-Werkstück 10 mit Kanten 11. Eine Bearbeitungsstrategie nach dem Stand der Technik würde die in FIG 7 gezeigte, mäanderförmige Fräsbahn 12 erzeugen.

FIG 8 zeigt die erfindungsgemäß ermittelten Vorzugsrichtungen für Einzelbahnen, nachfolgend auch als Vorzugseinzelbahnen 13 bezeichnet, für die Bearbeitung. Dabei sind die Vorzugsrichtungen immer senkrecht zu einer Kante 11 des Ist-Werkstücks 10. Die Verbindungseinzelbahnen 14 verbinden die jeweiligen Vorzugseinzelbahnen 13 in geeigneter Art und Weise. Krümmungssprünge bei der Bearbeitung dieses Ist-Werkstücks 10 sind jedoch nicht zu vermeiden. Durch die erfindungsgemäße Ermittlung der Vorzugseinzelbahnen 13 weisen die Verbindungseinzelbahnen 14/Vorzugseinzelbahnen 13 zumindest eine gleiche Krümmungscharakteristik auf. Dadurch entsteht ein gleichartiges Fräsbild.

**Patentansprüche**

1. Steuerungsverfahren für die Bewegung eines Werkzeugs mit einer Werkzeugmaschine zur Erzeugung einer beliebigen Sollfläche durch Bearbeiten, wobei ein numerisches Bahnprogramm, welches die Bearbeitung des Werkstücks mit dem Werkzeug in Bearbeitungspunkten beschreibt, zur Steuerung der Werkzeugmaschine durch eine Steuerungsvorrichtung erzeugt wird, und wobei die Bahn aus mehreren Stützpunkten und Einzelbahnen besteht und jede Einzelbahn ein Paar der Stützpunkte miteinander verbindet, und wobei die Steuerung der Werkzeugmaschine entsprechend der erzeugten Bahn erfolgt, wobei das Bahnprogramm zur Steuerung der Werkzeugmaschine anhand eines geometrischen Qualitätskriteriums bewertet und ausgewählt wird, wobei das geometrische Qualitätskriterium zumindest als ein Kriterium die Stetigkeit der durch das Bahnprogramm erzeugten Bahn umfasst, so dass das Bahnprogramm die Bahn in Bezug auf die geometrische Beschaffenheit der Oberfläche des zu bearbeitenden Werkstücks erzeugt,

- wobei das geometrische Qualitätskriterium sowohl das Kriterium der Krümmungsstetigkeit und das Kriterium der Tangentenstetigkeit als auch das Kriterium der Charakteristika der Werkzeugmaschine umfasst, wobei ein Kombinationstool das Bahnprogramm zur Steuerung der Werkzeugmaschine anhand einer geeigneten Kombination aus diesen Kriterien berechnet, bewertet und auswählt,
- wobei die Bahn verschiedene Einzelbahnen umfasst und jede Einzelbahn nach dem geometrischen Qualitätskriterium bewertet wird, **dadurch gekennzeichnet**
- **dass** die nach dem geometrischen Qualitätskriterium ausgewählten Einzelbahnen eine Vorzugsrichtung ausweisen und
- **dass** die Bahn nach den Vorzugsrichtungen der Einzelbahnen ausgewählt wird.

**2.** Steuerungsverfahren nach Anspruch 1, **dadurch gekennzeichnet, dass** mehrere Bahnprogramme zu einer vorgegebenen Sollfläche erzeugt werden und hinsichtlich des geometrischen Qualitätskriteriums bewertet und ausgewählt werden.

**3.** Steuerungsverfahren nach einem der Ansprüche 1 oder 2, **dadurch gekennzeichnet, dass** die Werkzeugmaschine eine zerspanende Werkzeugmaschine, insbesondere eine Fräsmaschine ist.

**4.** Steuerungsvorrichtung für die Bewegung eines Werkzeugs mit einer Werkzeugmaschine zur Erzeugung einer beliebigen Sollfläche durch Bearbeiten, wobei ein numerisches Bahnprogramm, welches die Bearbeitung des Werkstücks mit dem Werkzeug in den Bearbeitungspunkten beschreibt, zur Steuerung der Werkzeugmaschine durch die Steuerungsvorrichtung erzeugbar ist, und wobei die Bahn aus mehreren Stützpunkten und Einzelbahnen besteht und jede Einzelbahn ein Paar der Stützpunkte miteinander verbindet und die Steuerung der Werkzeugmaschine entsprechend der erzeugten Bahn erfolgt, wobei das Bahnprogramm zur Steuerung der Werkzeugmaschine anhand eines geometrischen Qualitätskriteriums bewertbar und auswählbar ist, und wobei das geometrische Qualitätskriterium zumindest als ein Kriterium die Stetigkeit der durch das Bahnprogramm erzeugten Bahn umfasst, so dass durch das Bahnprogramm die Bahn in Bezug auf die geometrische Beschaffenheit der Oberfläche des zu bearbeitenden Werkstücks erzeugbar ist,

- wobei das geometrische Qualitätskriterium sowohl das Kriterium der Krümmungsstetigkeit und das Kriterium der Tangentenstetigkeit als auch das Kriterium der Charakteristika umfasst, wobei durch ein Kombinationstool das Bahnprogramm zur Steuerung der Werkzeugmaschine anhand einer geeigneten Kombination aus diesen Kriterien berechenbar, bewertbar und auswählbar ist und
- wobei die Bahn verschiedene Einzelbahnen umfasst und jede Einzelbahn nach dem geometrischen Qualitätskriterium bewertbar und auswählbar ist, **dadurch gekennzeichnet dass** die nach dem geometrischen Qualitätskriterium ausgewählten Einzelbahnen eine Vorzugsrichtung ausweisen.

**5.** Steuerungsvorrichtung nach Anspruch 4,
**dadurch gekennzeichnet, dass** mehrere Bahnprogramme zu einer vorgegebenen Sollfläche erzeugbar sind und hinsichtlich des geometrischen Qualitätskriteriums bewertbar und auswählbar sind.

**6.** Steuerungsvorrichtung für nach einem der Ansprüche 4 oder 5,
**dadurch gekennzeichnet, dass** die Werkzeugmaschine eine zerspanende Werkzeugmaschine, insbesondere eine Fräsmaschine ist.

## Claims

**1.** Control method for the movement of a tool with a machine tool in order to produce an arbitrary required surface by machining, wherein a numeric path program, which describes the machining of the workpiece with the tool at machining points, is created for control of the machine tool by a control device, and wherein the path consists of a plurality of sample points and individual paths and each individual path connects a pair of the sample points to each other and wherein the machine tool is controlled in accordance with the produced path, wherein the path program for controlling the machine tool is evaluated and selected on the basis of a geometric quality criterion, wherein the geometric quality criterion comprises the continuity as at least one criterion, such that the path program produces the path with respect to the geometric nature of the surface of the workpiece to be machined,

- wherein the geometric quality criterion comprises both the criterion of the curvature continuity and the criterion of the tangency continuity and also the criterion of the characteristics, wherein a combination tool calculates, evaluates and selects the path program for control of the machine tool on the basis of a suitable combination of these criteria,
- wherein the path comprises different individual paths and each individual path is evaluated according to the geometric quality criterion, **characterised in that**
- the individual paths selected according to the geometric quality criterion have a preferred direction,
- the path is selected according to the preferred directions of the individual paths.

2. Control method according to claim 1, **characterised in that** a plurality of path programs are produced for a predetermined required surface and are evaluated and selected with respect to the geometric quality criterion.

3. Control method according to claim 1 or 2,
**characterised in that** the machine tool is a cutting machine tool, in particular a milling machine.

4. Control device for the movement of a tool with a machine tool in order to produce an arbitrary required surface by machining, wherein a numeric path program, which describes the machining of the workpiece with the tool at the machining points, is able to be created for control of the machine tool by a control device, and wherein the path consists of a plurality of sample points and individual paths and each individual path connects a pair of the sample points to each other and wherein the machine tool is controlled in accordance with the produced path, wherein the path program for controlling the machine tool is able to be evaluated and selected on the basis of a geometric quality criterion, and wherein the geometric quality criterion comprises the continuity as at least one criterion, such that the path program is able to produce the path with respect to the geometric nature of the surface of the workpiece to be machined,

- wherein the geometric quality criterion comprises both the criterion of the curvature continuity and the criterion of the tangency continuity and also the criterion of the characteristics, wherein the path program for control of the machine tool is able to be calculated, evaluated and selected by a combination tool on the basis of a suitable combination of these criteria,
- the path comprises different individual paths and each individual path is able to be evaluated and selected according to the geometric quality criterion, **characterised in that** the individual paths selected according to the geometric quality criterion have a preferred direction,

5. Control device according to claim 4,
**characterised in that** a plurality of path programs are able to be produced for a predetermined required surface and are able to be evaluated and selected with respect to the geometric quality criterion.

6. Control device according to claim 4 or 5,
**characterised in that** the machine tool is a cutting machine tool, in particular a milling machine.

**Revendications**

1. Procédé de commande du mouvement d'un outil, comprenant une machine-outil de production d'une surface de consigne quelconque par usinage, dans lequel on produit un programme numérique de trajectoire, qui décrit en points d'usinage l'usinage de la pièce par l'outil, pour commander la machine-outil par un système de commande, et dans lequel la trajectoire est constituée de plusieurs points d'appui et trajectoires individuelles et chaque trajectoire individuelle relie entre eux une paire des points d'appui et dans lequel la commande de la machine-outil s'effectue conformément à la trajectoire produite, dans lequel on évalue et on choisit le programme de trajectoire pour commander la machine-outil à l'aide d'un critère de qualité géométrique, le critère de qualité géométrique comprenant, comme au moins l'un des critères, la continuité de la trajectoire produite par le programme de trajectoire, de manière à ce que le programme de trajectoire produise la trajectoire par rapport à la nature géométrique de la surface de la pièce à usiner,

- dans lequel le critère de qualité géométrique comprend tant le critère de continuité de courbure et le critère de continuité de tangente, qu'également le critère des caractéristiques de la machine-outil, un outil de combinaison calculant, évaluant et choisissant le programme de trajectoire pour commander la machine-outil à l'aide d'une combinaison appropriée de ces critères,
- dans lequel la trajectoire comprend diverses trajectoires individuelles et on évalue chaque trajectoire individuelle suivant le critère de qualité géométrique, **caractérisé**
- **en ce que** les trajectoires individuelles choisies suivant le critère de qualité géométrique ont une direction préférentielle et
- on choisit la trajectoire suivant les directions préférentielles des trajectoires individuelles.

2. Procédé de commande suivant la revendication 1, **caractérisé en ce que** l'on produit plusieurs programmes de trajectoire en une surface de consigne donnée à l'avance et on les évalue et on les choisit du point de vue du critère de qualité géométrique.

3. Procédé de commande suivant l'une des revendications 1 ou 2, **caractérisé en ce que** la machine-outil et une machine-outil, est une machine-outil à enlèvement de copeaux, notamment une machine à fraiser.

4. Système de commande du déplacement d'un outil, de production d'une surface de consigne quelconque par usinage, un programme numérique de trajectoire, qui décrit en les points d'usinage l'usinage de la pièce par l'outil, pouvant être produit pour commander la machine-outil par le système de commande et dans lequel la trajectoire est constituée de plusieurs points d'appui et trajectoires individuelles et chaque trajectoire individuelle relie entre eux une paire des points d'appui et la commande de la machine-outil s'effectue conformément à la trajectoire produite, dans lequel le programme de trajectoire, pour commander la machine-outil, peut être évalué et choisi à l'aide d'un critère de qualité géométrique et dans lequel le critère de qualité géométrique comprend, comme au moins l'un des critères, la continuité de la trajectoire produite par le programme de trajectoire, de manière à pouvoir produire, par le programme de trajectoire, la trajectoire par rapport à la nature géométrique de la surface de la pièce à usiner,

- dans lequel le critère de qualité géométrique comprend tant le critère de la continuité de courbure et le critère de la continuité de tangente, qu'également le critère des caractéristiques, dans lequel, par un outil de combinaison, le programme de trajectoire pour commander la machine-outil peut être calculé, évalué et choisi à l'aide d'une combinaison appropriée de ces critères et
- dans lequel la trajectoire comprend diverses trajectoires individuelles et chaque trajectoire individuelle peut être évaluée et choisie suivant le critère de qualité géométrique, **caractérisé en ce que** les trajectoires individuelles choisies suivant le critère de qualité géométrique ont une direction préférentielle.

5. Procédé de commande suivant la revendication 4,
**caractérisé en ce que** plusieurs programmes de trajectoire peuvent être produits en une surface de consigne donnée à l'avance et peuvent être évalués et choisis du point de vue du critère de qualité géométrique.

6. Procédé de commande suivant l'une des revendications 4 ou 5,
**caractérisé en ce que** la machine-outil est une machine-outil à enlèvement de copeaux, en étant notamment une machine à fraiser.

FIG 1

FIG 2

FIG 3

FIG 4

FIG 5

FIG 6

FIG 7

FIG 8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 60123379 T2
- JP 2007200037 A
- DE 102013112232 B3